# EUROPEAN PATENT APPLICATION

(11) **EP 2 323 380 A1**
(43) Date of publication of application: **18.05.2011**
(21) Application number: 10186799.2
(22) Date of filing: 07.10.2010
(51) Int. Cl.: H04N 5/445, G11B 27/10, H04N 9/82

(54) **Display device and control method thereof**

(30) Priority: 20.10.2009 KR 20090099985
(71) Applicant: Samsung Electronics Co., Ltd., Suwon-si, Gyeonggi-do (KR)
(72) Inventor: BAE, Se-hyun, Gyeonggi-do (KR)
(74) Representative: Bruce, Alexander Richard Henry

(57) **Abstract**

A display device includes a signal receiver configured to receive an image signal; a signal processor configured to process the image signal received by the signal receiver; a display unit configured to display an image corresponding to the image signal processed by the signal processor; and a controller configured to control the signal processor to play back an image based on an image file executed by the playback program, and to display a subtitle corresponding to the image of the image file on the display unit if a subtitle corresponding to the image of the image file cannot be displayed by the playback program. Thus, in an exemplary embodiment, even if a subtitle corresponding to an image is not displayable by a playback program by which the image is played back, it is possible to provide a corresponding subtitle.

## Description

The present invention relates to a display device and a method of controlling the same, and more particularly, to a display device and a method of controlling the same, capable of providing a subtitle corresponding to a displayed image.

A display apparatus such as a TV receives an image signal, such as a broadcasting signal, to display an image. In the display apparatus, an image can also be played back by executing a specific image file with a playback program. While an image is displayed, a subtitle corresponding to the displayed image can also be displayed by the playback program. For these playback programs, an open-source playback program have mainly been employed in view of the time and costs associated with developing a playback program that adequately operates in a TV or a mobile phone.

Even if audio or video files are executable by the open-source playback programs, not all subtitles are displayable by these open source playback programs. Only for specific formats of image files, subtitles may be displayed by the open source playback programs. For that reason, when an image is displayed in a TV or a mobile phone where a corresponding subtitle is not displayable, it is difficult for a user to use the subtitle.

Accordingly, an aspect of the present invention is to provide a display device and a method of controlling the same, capable of providing a subtitle corresponding to an image that is played back by a playback program when the subtle is not displayable by the playback program.

The foregoing and/or other aspects of the present invention can be achieved by providing, a signal receiver configured to receive an image signal; a signal processor configured to process the image signal received by the signal receiver; a display unit configured to display an image corresponding to the image signal processed by the signal processor; and a controller configured to control the signal processor to playback an image based on an image file executed by the playback program, and configured to control the display unit to display a subtitle corresponding to the image of the image file if a subtitle corresponding to the image of the image file cannot be displayed by the playback program.

The controller may synchronize the subtitle with the image.

The controller may synchronize the subtitle with the image based on playback time information of the image.

The apparatus may include a communication unit configured to communicate with a server for providing a subtitle through a network. The controller controls the communication unit to receive from the server subtitle file corresponding to the image.

The apparatus may include a user input unit configured to receive an input from a user. The controller controls the display unit to display subtitle information of the received subtitle file(s); and determines whether a corresponding subtitle is displayed, depending on the user's input.

The apparatus may include a communication unit configured to communicate with a device for providing a subtitle through a local connection. The controller controls the communication unit to receive from the device subtitle file corresponding to the image.

The apparatus may include a user input unit configured to receive an input from a user, where the controller controls the display unit to display subtitle information of the received subtitle file(s); and determines whether a corresponding subtitle is displayed, depending on the user's input.

The apparatus may include a storage configured to store a subtitle file(s) including information related to the subtitle corresponding to the image,
where the controller controls the display unit to display the subtitle based on the subtitle file stored in the storage.

The apparatus may include a user input unit configured to receive an input from a user, where the controller selects one of the subtitle files to be executed depending on the user's input.

The image signal may include a broadcasting signal received through a plurality of channels, and the controller controls the signal receiver to receive a broadcasting signal through the channel selected by a user from a number of channels.

Another aspect of the present invention is achieved by providing displaying the image corresponding to the image file by activating the playback program to execute the image file; displaying a subtitle corresponding to the image of the image file if a corresponding subtitle is not displayable by the playback program.

The displaying of the subtitle may include synchronizing the subtitle with the image.

The synchronizing of the subtitle may include synchronizing the subtitle with the image based on playback time information of the image.

The method may include receiving subtitle corresponding to the image from a server for providing a subtitle through a network.

The method may display subtitle information of the received subtitle; and determine whether the subtitle is displayed, depending on user's input.

The method may include receiving subtitle corresponding to the image from a device for providing a subtitle through a local network.

The method may display subtitle information of the received subtitle; and determine whether the subtitle is displayed, depending on user's input.

The displaying of the subtitle may include displaying the subtitle based on a subtitle file including subtitle information.

The method may include receiving an input related to the subtitle from a user; and selecting one of the subtitle files to be executed depending the user's input.

The image signal may include a broadcasting signal received through a plurality of channels, and the display device receives a broadcasting signal through the channel selected by a user from a number of channels.

According to yet another aspect, a computer readable medium storing instructions for executing a method of controlling a display device which displays an image corresponding to an image signal is provided. In this method, the image corresponding to the image file may be displayed by activating the playback program to execute the image file and a subtitle from a separate subtitle file may be displayed that corresponds to the image of the image file if a corresponding subtitle is not displayable by the playback program.

In the computer readable medium, the subtitle may be displayed in a dedicated user interface in a format specified by a user.

In the computer readable medium, the shape of the dedicated user interface may be is specified by the user.

According to yet another aspect, a control device is provided. The control device includes a controller which controls the display device to display an image corresponding to an image file by activating a playback program and which controls the display device to display a subtitle from a separate subtitle file corresponding to the image of the image file if the corresponding subtitle is not displayable by the playback program.

The controller may control the display device to display the subtitle in a dedicated user interface in a format specified by a user. The corresponding subtitle is not displayable by the playback program if the playback program cannot support format of a subtitle file comprising the corresponding subtitle.

The controller may control the display apparatus to display the dedicated user interface in a shape specified by the user.

According to yet another aspect, a method of controlling a display device which displays an image is provided. The method includes controlling the display device to display the image corresponding to the image file by activating the playback program and controlling the display device to display a subtitle from a separate subtitle file corresponding to the image of the image file if the corresponding subtitle is not displayable by the playback program.

The subtitle may be displayed in a dedicated user interface in a format specified by a user. The corresponding subtitle may not be displayable by the playback program if the playback program cannot support format of a subtitle file comprising the corresponding subtitle.

The shape of the dedicated user interface may be specified by the user.

The above and/or other aspects of the present invention will become apparent and more readily appreciated from the following description of the exemplary embodiments, taken in conjunction with the accompanying drawings, in which:
FIG. 1 is a block diagram schematically illustrating a structure of a display device in accordance with an exemplary embodiment;
FIG. 2 is a view illustrating a widget-type user interface provided by the display device in accordance with an exemplary embodiment; and
FIG. 3 is a flowchart illustrating an operation of the display device in accordance with an exemplary embodiment.

Below, exemplary embodiments will be described in detail with reference to accompanying drawings so as to be easily realized by a person having ordinary skill in the art. The present invention may be embodied in various forms without being limited to the exemplary embodiments set forth herein. Descriptions of well-known parts are omitted for clarity, and same reference numerals refer to analogous elements throughout the description.

Referring to the accompanying drawings, exemplary embodiments are as follows.

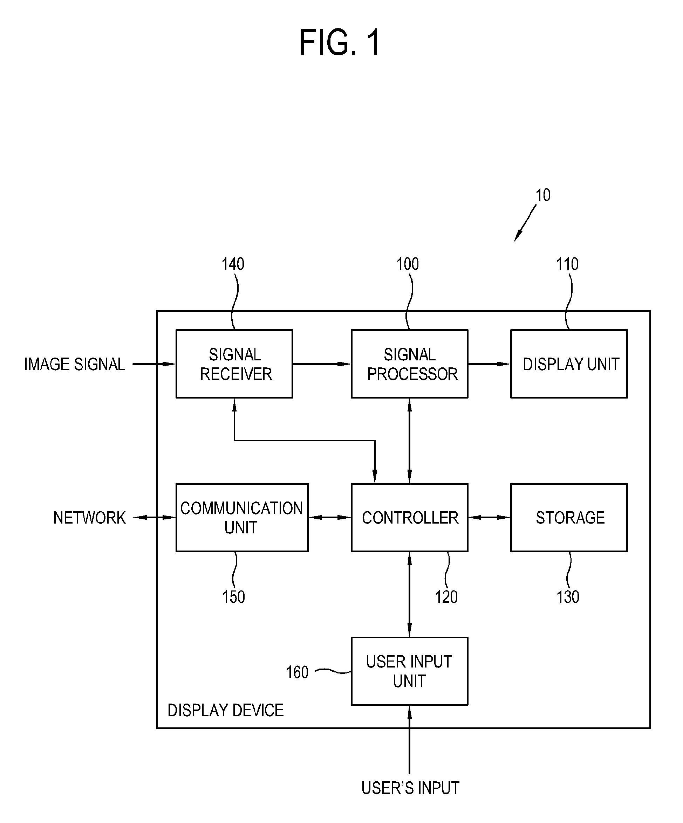

FIG. 1 is a block diagram schematically illustrating a structure of a display device 10 in accordance with an exemplary embodiment of the present invention. The display device 10, which is embodied as a TV, a mobile terminal or the like, may receive and process an image signal to display a corresponding image.

As shown in FIG. 1, in accordance with an exemplary embodiment, the display device 10 may include a signal receiver 140, a signal processor 100, a display unit 110, a controller 120, storage 130, and a user input unit 160. The display device may further include a communication unit 150.

The signal receiver 140 may receive from an external source an image signal including a broadcasting signal such as a digital TV (DTV) signal and a cable broadcasting signal. In this case, the signal receiver 140 may be tuned to a broadcasting signal selected by a user. The signal receiver 140 may also receive an image signal from a digital versatile disk (DVD), a blue-ray disk (BD) or the like.

In addition, the signal receiver 140 may receive various types of signals such as a sound signal for outputting a sound and a data signal for outputting data. In the accordance with an exemplary embodiment, the signal receiver 140 may receive a broadcasting signal including an image, a sound, and a data signal.

The signal processor 100 may receive an image signal from the signal receiver 140 to perform a predetermined signal processing such as a decoding operation, an image enhancing operation, a scaling operation and the like.

Further, the signal processor 100 may demultiplex the received signal for dividing a broadcasting signal received by the signal receiver 140 into an image signal, a sound signal, and a data signal, and furthermore, perform a decoding processing on the sound and the data signal. In this case, the display device 10 may further include a sound output (not shown) such as a speaker to output a sound corresponding to the sound signal processed by the signal processor 100.

The display unit 110 may display an image corresponding to the image signal processed by the signal processor 100. The image may be displayed by, e.g., a liquid crystal display (LCD) as the display 110. In this case, the display 110 may include a LCD panel, a panel actuator, a backlight unit and the like, which are not shown. The display unit 110 may display data contents corresponding to the data signal processed by the signal processor 100.

The storage 130 may be embodied as a non-volatile memory such as a flash memory or a hard disk. Data or information related to the display device 10 may be stored in the storage 130. In accordance with an exemplary embodiment, an image file that is executable by a playback program and a corresponding subtitle file may be stored in the storage 130. This will be described in detail later.

The user input unit 160, which receives an input from a user, may be embodied as a remote control capable of remote manipulation, a manipulation panel provided on a main body (not shown) of the display device 10, or the like. The user's input received through the user input unit 160 may be transferred to the controller 120.

As an optional element, the communication unit 150 may communicate with a target communication device (not shown) through a network such as the Internet. Alternatively, the communication unit 150 may communicate with the target communication device by using a local area network (LAN or hereinafter referred to as "local connection,") such as a USB communication or a Bluetooth.

Under the control of the controller 120, the communication unit 150 may receive or transmit information, such as an image, sound, and/or data, from or to the target communication device. The received information may be subject to an adequate processing to be displayed through the display unit 110 or the like.

Further, in an exemplary embodiment, the communication unit 150 may receive a subtitle file that corresponds to an image file from a target communication device (hereinafter, referred to as "subtitle providing server" or "subtitle providing device") for providing a corresponding subtitle through a network or a local connection under the control of the controller 120. This will be described in detail later.

The controller 120 may generally control various elements, such as the signal processor 100, of the display device 100. For example, in accordance with an exemplary embodiment, the controller 120 may activate the aforementioned playback program and control a subtitle corresponding to an image of an image file that is executed by the playback program to be synchronously displayed. When a user wants to execute an image file, the playback program may be activated by the controller 120.

In an exemplary embodiment, the controller 120 may include a control program which is activated to perform the aforementioned control processes; a non-volatile memory such as a flash memory in which the control program is storable; a RAM which serves as a main memory for entirely or partially loading the control program when the control program is executed; a microprocessor which performs the same functions as a central processing unit (CPU) for activating the control program loaded in the main memory.

In an exemplary embodiment, the control program of the controller 120 may be embodied as a combination of an operating system program, such as a so-called firmware, of the display device 10; and a dedicated program for displaying a subtitle corresponding to an image as an application program supported by the operating system program.

In an exemplary embodiment, the dedicated program for displaying a subtitle may be embodied in various forms. For example, the dedicated program for displaying a subtitle may be embodied as a so-called widget, which is a type of an application program.

The controller 120, as described above, may control to display a subtitle on the display unit corresponding to an image of an image file executed by a playback program. Furthermore, the controller 120 may control the display unit 110 to display a subtitle corresponding to an image of an image signal received through the signal receiver 140.

Hereinafter, an operation of displaying an image and a corresponding subtitle by the display device 10 in accordance with an exemplary embodiment will be described in detail.

If a request for playing back a specific image is input from a user via the user input unit 160, the controller 120 may activate a playback program to display a corresponding image file on a display unit 110. If the image file is displayed by the executed playback program, the controller 120 may determine whether a subtitle corresponding to the image is displayable by the playback program.

If the subtitle is not displayable by the playback program, the controller 120 may display another subtitle corresponding to the image of the displayed image file. For example, the subtitle may not be displayable by the playback program, when the playback program has no subtitle display function; or when there is no corresponding subtitle file or the format of a subtitle file is not available even if the playback program has a subtitle display function.

To determine whether a subtitle is displayable by the playback program, the controller 120 may check whether the playback program has an adequate subtitle display function for a corresponding subtitle file by using preset version information, for example; or whether an operation for displaying the subtitle is performed by the playback program while the image file is executed.

As described above, if the storage 130 has a subtitle file corresponding to an image file that is being executed and the subtitle file is available by the playback program, a corresponding subtitle may be displayed under the control of the controller 120. However, if the storage 130 has no corresponding subtitle file; the subtitle file is not available for display by the playback program; or even if the storage 130 has the corresponding subtitle file, but the subtitle file has a poor quality, for example, the controller 120 may then receive at least one corresponding subtitle file from a subtitle providing server or a subtitle providing device through a network or a local connection. The received subtitle file(s) may be stored in the storage 130.

Thereafter, the controller 120 may display subtitle information of at least one available subtitle file, e.g., a user-selected subtitle file and/or a received subtitle file(s), on the display 110 to determine whether a user wants to display a corresponding subtitle and which one of the subtitle files a user wants to use. Then, depending on a user's input, the controller 120 may determine whether the subtitle is displayed and which one of the subtitle files is selected.

Successively, the controller 120 may synchronize the image and the corresponding subtitle to display the image and the subtitle together. Specifically, based on playback time information of the image, the controller 120 may synchronize the subtitle with the image.

In accordance with the aforementioned exemplary display device 10, it is possible to display a desired subtitle by using playback programs of common formats such as FFmpeg and open sources instead of a dedicated program for the display device 10. Further, since the dedicated playback program need not be developed for the display device 10, the cost and time to develop such custom program can be saved. In addition, since it is not necessary to consider subtitle display when the playback program for the display device 10 is designed, only the image display can be considered, thereby improving efficiency of the design.

Alternatively, the controller 120 may change the color of the subtitle in regular intervals or display corresponding subtitles only when specific images selected by a user are displayed. Such subtitle control would be helpful for a user who wants to study a specific language by using a movie or the like.

As another variation, the controller 120 may display a subtitle corresponding to an image of an image signal received from the image receiver 140.

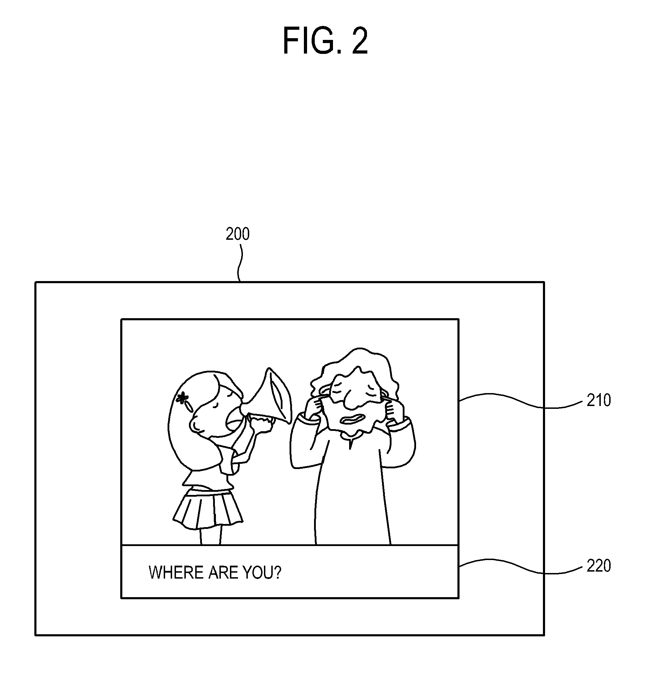

FIG. 2 is a view illustrating a widget-type user interface 200 provided by the display device 10 in accordance with an exemplary embodiment. In the display device 10, in accordance with an exemplary embodiment, a widget may be a factor of a graphic interface for enabling a user to easily interact with an application program, an operating system and the like, similarly to a Window or a text file. In the programming, the widget may be a program for interacting with a user interface. The widget may be embodied as an icon, a pull-down menu, a button, a combobox, a check box, a scrollbar, a window, a toggle button, a form or the like to communicate with a user.

To provide the widget-type user interface 200, the controller 120 may display the widget-type user interface 200 such that an image 210 is displayed at a region in the widget-type user interface 200 and a subtitle 220 synchronized with the image 210 is displayed at another region in the widget-type user interface 200. The subtitle 220 is often displayed below the image 210 to enable a user to easily watch the image 210 and the subtitle 220. Alternatively, the image 210 and the subtitle 220 may be displayed anywhere on a screen as desired by a user.

The widget-type user interface 200 may also be displayed in various forms as desired by a user. For example, the widget-type user interface 200 may be displayed in any shape such as the shape of a favorite animal or a well-known person. Furthermore, the regions where the image 210 and the subtitle 220 are displayed may have different wallpaper colors.

In the display device 10 in accordance with an exemplary embodiment, the widget-type user interface 200 may respectively be provided in various positions, shapes, and colors to display an image and a corresponding subtitle as desired by a user.

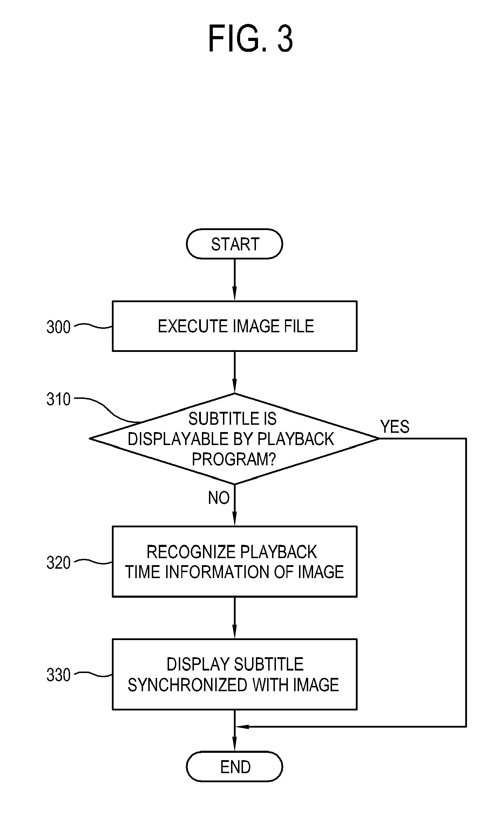

FIG. 3 is a flowchart illustrating an operation of the display device 10 in accordance with an exemplary embodiment. If a user wants to play back or display a specific image, the controller 120 may activate a playback program to display a corresponding image file (S300). Then, the controller 120 may determine whether or not there is a subtitle corresponding to the image being displayed; and whether the subtitle is displayable by the playback program (S310). If the subtitle is not displayable, the controller 120 may receive a corresponding subtitle from a subtitle providing server or a subtitle providing device through a network or a local connection, and furthermore, receive playback time information of the image from the playback program to recognize the received information (S320). If the playback time of the image is recognized, the image and the subtitle synchronized with the image may be displayed (S330).

As described above, in an exemplary embodiment, even if a subtitle corresponding to an image is not displayable by a playback program by which the image is played back, it is possible to provide a corresponding subtitle.

Further, if an image corresponding to a received image signal is displayed, a subtitle synchronized with the image may be displayed, thereby enabling a user to easily understand broadcasted contents.

Although a few exemplary embodiments have been shown and described, it will be appreciated by those skilled in the art that changes may be made in these embodiments without departing from the principles of the invention, the scope of which is defined in the appended claims.

## Claims

1. A display device comprising:
a signal receiver which receives an image signal;
a signal processor which processes the image signal received by the signal receiver;
a display unit which displays an image based on the image signal processed by the signal processor; and
a controller which controls the signal processor to display an image based on an image file executed by the playback program, and which controls to display a subtitle corresponding to the image of the image file on the display unit if a subtitle corresponding to the image of the image file cannot be displayed by the playback program.

2. The device of claim 1, wherein the controller synchronizes the subtitle with the image.

3. The device of claim 2, wherein the controller synchronizes the subtitle with the image based on playback time information of the image.

4. The device of claim 1, further comprising a communication unit which communicates with a server which provides a subtitle through a network,
wherein the controller controls the communication unit to receive from the server subtitle file corresponding to the image.

5. The device of claim 4, further comprising a user input unit which receives an input from a user,
wherein the controller controls to display subtitle information of the received subtitle file on the display unit and determines whether a corresponding subtitle is displayed, depending on the input from the user.

6. The device of claim 1, further comprising a storage which stores at least one subtitle file comprising information related to the subtitle corresponding to the image,
wherein the controller controls to display the subtitle on the display unit based on the subtitle file stored in the storage.

7. The device of claim 6, further comprising a user input unit which receives input from a user,
wherein the controller selects one of the at least one subtitle file for display with the image depending on the input from the user.

8. The device of claim 1, wherein the image signal comprises a broadcasting signal received through a plurality of channels, and
the controller controls the signal receiver to receive the broadcasting signal of the channel selected by a user from the plurality of channels.

9. A method of controlling a display device which displays an image corresponding to an image signal, the method comprising:
displaying the image corresponding to the image file by activating the playback program to execute the image file;
displaying a subtitle corresponding to the image of the image file if a corresponding subtitle is not displayable by the playback program.

10. The method of claim 9, wherein the displaying of the subtitle includes synchronizing the subtitle with the image.

11. The method of claim 10, wherein the synchronizing of the subtitle includes synchronizing the subtitle with the image based on playback time information of the image.

12. The method of claim 9, further comprising receiving the subtitle corresponding to the image from a server which provides a subtitle through a network.

13. The method of claim 12, further displaying subtitle information of the received subtitle; and
determining whether the subtitle is displayed, depending on an input from the user.

14. The method of claim 9, wherein the displaying of the subtitle comprises displaying the subtitle based on a subtitle file comprising subtitle information.

15. The method of claim 14, further comprising receiving an input related to the subtitle from the user; and
selecting one of the subtitle files to be executed depending the input of the user,
wherein the subtitle files comprise subtitles in different formats.
